# EUROPÄISCHE PATENTSCHRIFT

(11) **EP 1 880 129 B1**
(45) Veröffentlichungstag und Bekanntmachung des Hinweises auf die Patenterteilung: **03.06.2009**
(21) Anmeldenummer: 06724467.3
(22) Anmeldetag: 20.04.2006
(51) Int. Cl.: F16H 61/20, F16H 61/16

(54) **VERFAHREN UND VORRICHTUNG ZUR STEUERUNG EINER STILLSTANDSCHALTUNG EINES AUTOMATGETRIEBES**
METHOD AND DEVICE FOR CONTROLLING A STANDSTILL CIRCUIT OF AN AUTOMATIC TRANSMISSION
PROCEDE ET DISPOSITIF DE COMMANDE D'UN CHANGEMENT DE VITESSE A L'ARRET D'UNE BOITE DE VITESSES AUTOMATIQUE

(30) Priorität: 11.05.2005 DE 102005021720
(43) Veröffentlichungstag der Anmeldung: 23.01.2008
(73) Patentinhaber: ZF Friedrichshafen AG, 88038 Friedrichshafen (DE)
(72) Erfinder: REITH, Ulrich, 88281 Schlier (DE); GROENER, Wolfgang, 88048 Friedrichshafen (DE)
(86) Internationale Anmeldenummer: PCT/EP2006/003638
(87) Internationale Veröffentlichungsnummer: WO 2006/119851

(56) Entgegenhaltungen:
- DE-A1- 10 154 792
- DE-A1- 10 308 699
- DE-A1- 19 902 131
- US-A- 4 644 826
- US-A1- 2005 075 775
- PATENT ABSTRACTS OF JAPAN Bd. 015, Nr. 279 (M-1136), 16. Juli 1991 (1991-07-16) & JP 03 096760 A (NISSAN MOTOR CO LTD), 22. April 1991 (1991-04-22)
- PATENT ABSTRACTS OF JAPAN Bd. 1997, Nr. 04, 30. April 1997 (1997-04-30) & JP 08 326910 A (NISSAN MOTOR CO LTD), 10. Dezember 1996 (1996-12-10)
- PATENT ABSTRACTS OF JAPAN Bd. 009, Nr. 223 (M-411), 10. September 1985 (1985-09-10) & JP 60 081558 A (TOYOTA JIDOSHA KK), 9. Mai 1985 (1985-05-09)
- PATENT ABSTRACTS OF JAPAN Bd. 1999, Nr. 12, 29. Oktober 1999 (1999-10-29) & JP 11 193866 A (HONDA MOTOR CO LTD), 21. Juli 1999 (1999-07-21)

## Beschreibung

Die Erfindung betrifft ein Verfahren und eine Vorrichtung zur Steuerung einer Stillstandschaltung eines Automatgetriebes gemäß dem Oberbegriff der Patentansprüche 1 bzw. 21.

Automatgetriebe werden seit geraumer Zeit in unterschiedlichen Kraftfahrzeugtypen genutzt. Sie sind durch eine mechanische Entkoppelung der Gangwahlelemente und der Gangwahl am Getriebe gekennzeichnet und erleichtern dem Fahrer eines Kraftfahrzeugs seine Aufgabe, indem entweder vollständig automatisch ein jeweils geeigneter Fahrgang gewählt und aktiviert wird, oder zumindest der Gangwunsch des Fahrers auf Plausibilität geprüft und gegebenenfalls verweigert oder modifiziert wird.

Hierfür ist eine Entscheidungsvorrichtung notwendig, die mit Hilfe von bereitgestellten Daten, wie zum Beispiel der Fahrgeschwindigkeit, der Getriebeeingangsdrehzahl, Daten der Motorsteuerung und/oder weiteren Daten, entweder den jeweils zu aktivierenden Fahrgang auswählt oder einen vom Fahrer manuell eingegebenen Gangwunsch beurteilt und gegebenenfalls modifiziert, verweigert oder unverändert als neuen Fahrgang akzeptiert.

Des Weiteren ist bei Automatgetrieben eine entsprechende Steuerungsvorrichtung zur Ansteuerung des Automatgetriebes vorgesehen, welche die Durchführung des eigentlichen Schaltvorgangs steuert und/oder regelt. Diese kann mit der vorgenannten Entscheidungsvorrichtung eine Einheit bilden oder als separates Modul ausgebildet sein, und kann unter anderem über eine Fähigkeit verfügen, auf die Entscheidungsvorrichtung zurück zu wirken, wenn beispielsweise ein Zielgang nicht aktiviert werden kann.

Die Entscheidungsvorrichtung beinhaltet dabei gewöhnlich eine Stillstandschaltung, die bei stehendem Fahrzeug oder bei Unterschreitung einer vorgegebenen Grenzgeschwindigkeit eine Aktivierung eines Anfahrganges, in der Regel dem kleinsten Vorwärtsgang, bewirkt oder vorbereitet. Dies ist im normalen Fahrbetrieb vorteilhaft, kann jedoch unter bestimmten Umständen zu einem insgesamt unerwünschten Verhalten des Automatgetriebes führen:
Bei einem Anfahrvorgang eines Fahrzeugs unter Wirkung eines erheblichen Fahrwiderstandes, also etwa bei starken Steigungen, sehr hoher Beladung, losem Untergrund oder auch bei extremem Gegenwind in Verbindung mit z.B. einem Kastenaufbau, kommt es nach dem anfänglichen Anfahren und bei einem von der Entscheidungsvorrichtung des Automatgetriebes oder dem Fahrer veranlassten Wechsel in einen höheren Gang zu einer erheblichen Verlangsamung des Fahrzeugs, sobald die Zugkraft des Antriebsmotors nicht mehr an den Rädern zur Verfügung steht. Ausnahmen bilden hier lediglich einige zum Schalten unter Last ausgelegte Getriebesonderformen.

In Folge der durch den Schaltvorgang bedingten Zugkraftunterbrechung und der dadurch bedingten Verringerung der Fahrgeschwindigkeit wird eine Stillstandschaltung der Entscheidungsvorrichtung aktiviert, wenn beispielsweise die Fahrgeschwindigkeit unter die vorgegebene Grenzgeschwindigkeit gesunken oder auf Null oder sogar einen negativen Wert abgefallen ist.

Der ursprünglich von der Entscheidungsvorrichtung ausgewählte Zielgang, zumeist der zweite Gang, wird dann durch einen von der Stillstandschaltung vorgegebenen Gang, üblicherweise den ersten Gang ersetzt. Dies wiederum führt zu einem Abbruch des ursprünglichen Schaltvorgangs und einer Aktivierung des neuen Zielganges oder - sofern der Schaltvorgang beim Ansprechen der Stillstandschaltung bereits aktiviert war, zu einem unmittelbarem erneuten Gangwechsel in den neuen Zielgang. Unter unveränderten Randbedingungen ist es daher nicht möglich, z.B. in den zweiten Gang zu wechseln, da die Stillstandssteuerung stets erneut aktiviert wird, sobald ein Schaltvorgang in einen höheren Fahrgang eingeleitet oder durchgeführt wird.

Es sind verschiedene Lösungen für dieses Problem vorstellbar, die jedoch jeweils mit spezifischen Nachteilen behaftet sind:
Die bereits erwähnten Lastschaltgetriebe ermöglichen einen Gangwechsel ohne Zugkraftunterbrechung, sind allerdings in der Regel erheblich teuer als andere Getriebe und stellen oft auch erheblich höhere Ansprüche an den für diese notwendigen Bauraum.

Ein betroffener Fahrer könnte ohne Veränderungen an Getriebe oder Getriebesteuerung versuchen, den aktuellen Anfahrgang bis zu einer höheren Fahrgeschwindigkeit zu nutzen, um eine Geschwindigkeitsabnahme des Fahrzeugs während des Schaltvorganges unter die Grenzgeschwindigkeit zur Auslösung der Stillstandssteuerung zu vermeiden. Problematisch hierbei ist, dass der Fahrer gerade bei automatisch geschalteten Getrieben zumeist nur mittelbaren Einfluss auf die Gangwahl hat, indem er beispielsweise durch starke Auslenkung des Fahrpedals die Entscheidungsvorrichtung des Getriebes zu einem späteren Schalten und höheren Motordrehzahlen veranlasst. Gerade bei Anfahrvorgängen auf losem Untergrund, wie beispielsweise tiefem Sand oder auch von Schotter, Schnee oder Eis in Verbindung mit einer Steigung besteht hier eine erhebliche Gefahr des Durchdrehens der Fahrzeugräder.

Dies ist nicht nur aus Sicherheitsgründen unakzeptabel, sondern führt auch zu einer starken Zunahme der Drehgeschwindigkeit der Räder bei gleichzeitig nur geringer Zunahme der Fahrgeschwindigkeit. Da die meisten Fahrzeugsysteme jedoch nicht die wahre Geschwindigkeit des Fahrzeugs über Grund, sondern eine der Raddrehgeschwindigkeit entsprechenden Größe zur Geschwindigkeitsermittlung nutzen, führt das Durchdrehen der angetriebenen Räder zur Auslösung des Schaltvorganges, der durch diese Vorgehensweise eigentlich bis zum Erreichen einer höheren Fahrzeuggeschwindigkeit verzögert werden sollte.

Verfügt das Fahrzeug über eine Vorrichtung zur manuellen Anwahl eines Ganges, kann der Fahrer versuchen, im zweiten Gang anzufahren und so unter Inkaufnahme eines erhöhten Verschleißes der Kupplung das genannte Problem zu umgehen. Allerdings ist eine normale Stillstandschaltung gerade so ausgelegt, dass sie eine solche Gangwahl des Fahrers automatisch korrigiert, weshalb auch dieses Vorgehen nicht zielführend ist.

Alternativ könnte der Fahrer versuchen, den Gangwechsel z.B. über Schaltelemente nach Art einer manuell sequentiell schaltbaren Schaltvorrichtung des Automatgetriebes oder durch Begrenzung der schaltbaren Gänge mittels eines Wählhebels hinauszuschieben, bis das Fahrzeug eine höhere Fahrgeschwindigkeit erreicht hat. Diese Vorgehensweise kann in bestimmten Grenzfällen hilfreich sein, setzt jedoch ein bewusstes Eingreifen des Fahrers voraus und findet seine Grenzen spätestens dann, wenn die Entscheidungsvorrichtung aufgrund der vorhandenen Daten automatisch einen Schaltvorgang auslöst. Zudem ist sie nicht bei Automatgetrieben anwendbar, die nicht über Elemente zur manuellen Anwahl eines Zielganges verfügen.

Insgesamt ist daher festzuhalten, dass eine Stillstandschaltung, obwohl im normalen Fahrbetrieb grundsätzlich sinnvoll, unter bestimmten Randbedingungen die Bedienung eines Fahrzeugs erheblich erschweren kann, indem diese einen Wechsel in einen höheren Gang beim Anfahrvorgang verhindert oder zumindest erschwert.

Vor diesem Hintergrund liegt der Erfindung die Aufgabe zugrunde, ein Verfahren zur Steuerung einer Stillstandschaltung eines Automatgetriebes vorzustellen, mit dem die vorstehend beschriebenen Nachteile vermieden werden können. Insbesondere soll auch unter Wirkung eines hohen Fahrwiderstandes ein sicheres Anfahren eines Fahrzeugs ermöglicht werden. Weiter ist es Aufgabe der Erfindung eine Vorrichtung vorzustellen, mit deren Hilfe das beschriebene Verfahren durchgeführt werden kann. Verfahren und Vorrichtung sollen sich zudem durch eine möglichst einfache, kostengünstige und leicht zu implementierende Lösung der Aufgabe auszeichnen.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass sich die beschriebenen Probleme in Zusammenhang mit Anfahrvorgängen bei großem Fahrwiderstand und einem Automatgetriebe mit einer Entscheidungsvorrichtung und einer Stillstandschaltung dann vermeiden lassen, wenn die Stillstandschaltung unter bestimmten, in den Unteransprüchen genauer definierten Bedingungen wirkungslos geschaltet wird. Hierfür ist es vorteilhaft, wenn eine Anfahrüberwachungseinrichtung vorgesehen ist, welche die Stillstandschaltung bei Vorliegen bestimmter Bedingungen wirkungslos schaltet.

Demnach geht die Erfindung aus von einem Verfahren zur Steuerung einer Stillstandschaltung eines Automatgetriebes eines Fahrzeuges, mit einer Entscheidungsvorrichtung zur Auswahl des Zielganges, mit einer Anfahrüberwachungseinrichtung und mit einer Stillstandschaltung, die bei stehendem Fahrzeug oder bei Unterschreitung einer vorgegebenen Grenzgeschwindigkeit eine Aktivierung eines Anfahrganges bewirkt oder vorbereitet.

Der Begriff der Steuerung soll dabei neben reinen Steuerungen auch Regelungen mit umfassen, die beispielsweise den aktuellen Zustand der Stillstandschaltung oder deren Zustände innerhalb einer begrenzten Zeitspanne in der Vergangenheit mit berücksichtigen.

Automatgetriebe, Entscheidungsvorrichtung, Stillstandschaltung und Anfahrüberwachungseinrichtung können untereinander und/oder mit weiteren Elementen einer Steuerungsvorrichtung für die Ansteuerung des Automatgetriebes baulich und/oder funktional integriert oder auch als gesonderte Module ausgestaltet oder mit anderen und/oder weiteren Modulen integriert sein. Im Rahmen dieser Ausführungen kommt es lediglich auf die Funktion und nicht auf die bauliche Ausführung, Anordnung oder auch deren schaltungstechnische Realisierung an. So kann die Anfahrüberwachungsvorrichtung beispielsweise im einfachsten Fall aus einem mechanischen, vom Fahrer zu betätigenden Schalter bestehen, der beispielsweise eine Signalübertragung von einer Stillstandschaltung zu einer Entscheidungsvorrichtung unterbrechen kann. Oft ist jedoch eine bauliche Ausführung in Form einer fest verdrahteten Schaltung und/oder einer softwaregesteuerten Schaltung zweckdienlich oder notwendig.

Zur Lösung der gestellten Aufgabe ist hinsichtlich des Verfahrens zudem vorgesehen, dass die Anfahrüberwachungseinrichtung Daten über zumindest einen Fahrzeugzustand sowie gegebenenfalls weitere Daten einliest und auf deren Grundlage in Abhängigkeit von Entscheidungsregeln eine Unwirksamkeit der Stillstandschaltung bewirkt.

Sprachlich wird dabei im Folgenden von einer grundsätzlich gegebenen Wirksamkeit der Stillstandssteuerung während der Nutzung des Fahrzeuges ausgegangen, die durch die Anfahrüberwachungsvorrichtung bedarfsweise deaktiviert wird. Dabei stellen Lösungen, die von einer grundsätzlich nicht gegebenen Wirksamkeit der Stillstandssteuerung ausgehen, die durch die Anfahrüberwachungsvorrichtung bedarfsweise aktiviert wird, selbstverständlich technisch äquivalente Lösungen dar, die vom beanspruchten Schutzumfang jeweils mit umfasst werden.

Die Auswahl des vorausgesetzten Grundzustandes muss im Einzelfall auf Grundlage beispielsweise bereits bestehender Komponenten und/oder von bereits bestehenden Steuerungssoftwaremodulen vorgenommen werden.

In einer ersten bevorzugten Ausführungsform der Erfindung ist vorgesehen, dass die Anfahrüberwachungseinrichtung Daten einliest, die auf einem unmittelbaren Einwirken des Fahrers beruhen, und auf deren Grundlage in Abhängigkeit von Entscheidungsregeln eine Unwirksamkeit der Stillstandschaltung bewirkt. Unter einem unmittelbaren Einwirken des Fahrers wird dabei eine aktive Handlung des Fahrers verstanden. Dies hat den Vorteil, dass der Fahrer im Gegensatz zu anderen Ausgestaltungen direkt auf die Wirksamkeit oder Unwirksamkeit der Stillstandschaltung Einfluss nehmen kann. Diese direkte Einflussnahme ermöglicht nicht nur auf besonders einfache Weise die Berücksichtigung der individuellen Fähigkeiten des Fahrers und/oder dessen persönlicher Vorlieben in Bezug auf das Anfahrverhalten, sondern sie kann auch erheblich zur Akzeptanz des neuartigen Verfahrens beitragen.

Nachfolgend werden hierfür einige besonders vorteilhafte Ausgestaltungen näher erläutert, wobei jedoch darauf hingewiesen wird, dass die jeweils relevanten Signale vieler dieser Ausgestaltungen nicht nur auf einem unmittelbaren Einwirken des Fahrers beruhen können, sondern auch von anderen Komponenten bzw. Modulen abgegeben werden können.

Gemäß einer ersten Variante kann vorgesehen sein, dass die Anfahrüberwachungseinrichtung Daten über eine Auslenkung eines Fahrpedals einliest und die Stillstandschaltung dann unwirksam schaltet, wenn der Fahrpedalwinkel einen ersten Grenzwert überschreitet. Auf diese Weise kann der Fahrer einerseits über die Auslenkung des Fahrpedals direkt Einfluss auf die Wirksamkeit der Stillstandschaltung ausüben. Andererseits benötigt der Fahrer jedoch keinerlei spezifische Vorkenntnisse über die Wirkungsweise und/oder Bedienung der Anfahrüberwachungsvorrichtung, da in den eingangs beschriebenen Fällen, in denen eine Abschaltung der Anfahrüberwachungsvorrichtung ratsam ist, zumeist ohnehin mit einer relativ großen Auslenkung des Fahrpedals operiert werden muss, um das Fahrzeug überhaupt in Bewegung zu setzen.

Sollte jedoch beispielsweise im Rahmen einer Motorsteuerung oder einer Steuerung eines elektronischen Gaspedals eine gegebene tatsächliche Auslenkung in eine virtuelle oder korrigierte Auslenkung umgesetzt werden, die beispielsweise bewirken soll, dass ein bestimmter Auslenkungswinkel unabhängig von Zuladung, Steigung, Untergrundbeschaffenheit oder weiteren Faktoren stets einer definierten Beschleunigung des Fahrzeugs entspricht, so ist es selbstverständlich zweckmäßig, diese virtuelle oder korrigierte Auslenkung als Bezugsgrenze zu wählen. In diesem Fall beruht die verwendete Eingangsgröße zwar nur noch mittelbar auf einer Einwirkung des Fahrers, erfüllt letztlich jedoch dieselbe Funktion.

In einer zweiten Variante ist vorgesehen, dass die Anfahrüberwachungseinrichtung Daten über eine Aktivierung einer Fahrzeugbremse einliest und die Stillstandschaltung dann unwirksam schaltet, wenn keine Bremswirkung einer Fahrzeugbremse vorliegt oder die Bremswirkung unterhalb eines zweiten Grenzwertes liegt.

Auf diese Weise wird die Stillstandsüberwachung nur dann ausgelöst, wenn der Fahrer oder ein anderes System bremst. Wenn die Geschwindigkeitsabnahme des Fahrzeugs bis unter einen Grenzwert, bei dem die Stillstandschaltung aktiv wird, auf einer direkten Bremsbetätigung des Fahrers oder auf eines anderen Systems beruht, kann zumeist davon ausgegangen werden, dass eine Unwirksamschaltung der Stillstandschaltung nicht erforderlich ist.

Ein Bremseingriff des Fahrers lässt sich dabei im einfachsten Fall über den Bremslichtschalter ermitteln. Bei neueren Fahrzeugen liegen Daten über die Bremsbetätigung jedoch auch im Bremssteuergerät und oft auch auf einem fahrzeuginternen CAN-Bus, also einem Fahrzeugdatenübertragungssystem vor.

Wenn jedoch beispielsweise nur eine geringe Bremswirkung vorliegt, kann diese beispielsweise auf einem automatischen Bremseingriff einer Antischlupfregelung an einem durchrutschenden Rad beruhen. Daher ist es sinnvoll, die Größe und/oder die Art des Bremseingriffes bei der Entscheidung über eine Unwirksamkeitsschaltung der Stillstandschaltung mit zu berücksichtigen.

Wenn die Anfahrüberwachungseinrichtung gemäß einer weiteren Variante Daten über eine Anforderung der Stillstandschaltung einliest und die Stillstandschaltung dann unwirksam schaltet, wenn keine Anforderung der Stillstandschaltung vorliegt, so kann der Fahrer im Fall eines vom Fahrer direkt zu betätigenden Gebers, beispielsweise eines Schalters, unmittelbar und unabhängig von anderen Parametern über die Aktivierung oder Deaktivierung der Stillstandschaltung entscheiden.

Eine etwas abweichende Ausprägung der Erfindung sieht vor, dass die Anfahrüberwachungseinrichtung Daten über eine Deaktivierung der Stillstandschaltung einliest und die Stillstandschaltung dann unwirksam schaltet, wenn eine Deaktivierung der Stillstandschaltung vorliegt. Der Unterschied zwischen beiden Varianten liegt im Wesentlichen darin, dass im ersten Fall eine aktive Schaltbetätigung zur Aktivierung der Stillstandschaltung vorausgesetzt wird, während im zweiten Fall eine aktive Schaltbetätigung zur Deaktivierung vorgesehen ist.

Sofern das Schaltelement beispielsweise aus einem Schalter mit zwei oder mehr rastenden Schaltstellungen besteht, ergeben sich in der Praxis keine Unterschiede. Sofern jedoch z.B. ein ergonomisch in vielen Fällen zu bevorzugender Taster zur vorübergehenden Beeinflussung der Stillstandssteuerung vorgesehen wird, spielt es sehr wohl eine Rolle, ob der Grundzustand des Systems eine Aktivierung oder ein Deaktivierung der Stillstandschaltung vorsieht. Gleiches gilt für Systeme, welche beispielsweise beim Abschalten der Zündung des Fahrzeugs in einen definierten Grundzustand zurückfallen.

Die Aktivierung bzw. Deaktivierung kann natürlich bei Bedarf und/oder in speziellen Fällen durch andere Signale beeinflusst und/oder überschrieben werden. Es ist geradezu erwünscht, verschiedene der in dieser Schrift vorgestellten Varianten sinnvoll und bevorzugt im Sinne einer hierarchischen Verknüpfung bzw. gemäß den Regeln der Booleschen Algebra miteinander zu verknüpfen. So kann beispielsweise ein Schaltelement für den Fahrer vorgesehen sein, mit dem dieser die Stillstandschaltung grundsätzlich aktivieren kann. Weiter kann die tatsächliche Aktivierung der Stillstandschaltung jedoch von anderen, vorstehend oder nachfolgend beschriebenen Anforderungen abhängig gemacht werden.

Bei Bedarf kann auch ein beispielsweise vierstufiger Schalter zur Bedienung durch den Fahrer vorgesehen sein, der neben den Stellungen "Stillstandschaltung aktivieren" und "Stillstandschaltung deaktivieren" noch jeweils zwei Unterstellungen für die Berücksichtigung weiterer Einflussfaktoren oder die zwangsweise Aktivierung bzw. Deaktivierung vorsieht. Selbstverständlich ist es auch möglich, dass an Stelle des Fahrers ein automatisches System die Schaltstellung vorgibt bzw. ein entsprechendes Signal ausgibt.

Während vorstehend der Fokus der Beschreibung auf Daten lag, die auf einem unmittelbaren Einwirken des Fahrers beruhen oder zumindest beruhen können, sollen im Folgenden vorteilhafte Varianten des erfindungsgemäßen Verfahrens vorgestellt werden, die darauf beruhen, dass die Anfahrüberwachungseinrichtung Daten einliest, die direkt am Getriebe und/oder an der Kupplung gewonnen werden können und sich auf einen Zustand des Getriebes und/oder der Kupplung beziehen, sowie auf deren Grundlage die Anfahrüberwachungseinrichtung in Abhängigkeit von Entscheidungsregeln eine Unwirksamkeit der Stillstandschaltung bewirkt. Dies bietet nicht nur den Vorteil, den Fahrer von einer aktiven Einflussnahme zu entlasten und eine möglicherweise unvorteilhafte manuelle Parametereingabe zu unterbinden, sondern bietet auch in sofern Vorteile, als die für die nachfolgend noch genauer beschriebenen Varianten des Verfahrens benötigten Daten in fast allen Fällen ohnehin bereits in der Getriebesteuerung bzw. in deren Untereinheiten Entscheidungsvorrichtung, Steuerungsvorrichtung und/oder Stillstandschaltung vorliegen.

Sofern innerhalb der Getriebesteuerung Daten über eine Drehrichtung von z.B. einer Welle des Getriebes vorliegen, ist es vorteilhaft, wenn die Anfahrüberwachungseinrichtung diese Daten einer Drehrichtungserkennung einliest und die Stillstandschaltung dann unwirksam schaltet, wenn sie eine Drehrichtung erkennt. Dies hat zur Folge, dass bei Stillstand des Fahrzeugs die Stillstandschaltung aktiviert wird, während auch bei einer geringen verbleibenden Rollgeschwindigkeit stets eine Drehrichtung erkannt und die Stillstandschaltung deaktiviert wird.

Eine andere Ausgestaltung des Verfahrens sieht vor, dass die Anfahrüberwachungseinrichtung Daten über eine Drehrichtung von einer Drehrichtungserkennung einliest und die Stillstandschaltung dann unwirksam schaltet, wenn sie eine Drehrichtungsumkehr erkennt. Eine Drehrichtungsumkehr ist ein verlässliches Indiz für einen Anfahrvorgang, bei welchem das Fahrzeug nicht nur z.B. in Folge einer starken Steigung während eines Schaltvorgangs zum Stehen kommt, sondern sogar zurückrollt. Die Umkehr der Drehrichtung eignet sich daher gut als Indikator für eine sinnvolle Deaktivierung der Stillstandschaltung. Um jedoch z.B. ein Ansprechen bei einem Zurückrollen von wenigen cm bei einem Ampelstopp oder dergleichen auszuschließen, empfiehlt es sich in diesem Fall besonders, Geschwindigkeitsgrenzwerte vorzusehen und/oder weitere Daten mit heranzuziehen.

Wenn die Anfahrüberwachungseinrichtung zum Beispiel mit Hilfe eines Geschwindigkeitssensors oder einer Drehrichtungserkennung Daten über einen Stillstand des Fahrzeugs einliest und die Stillstandschaltung dann unwirksam schaltet, wenn sie keinen Fahrzeugstillstand über eine definierte Zeitspanne erkennt, hat dies den Vorteil, dass bei einem längeren Stillstand des Fahrzeugs, beispielsweise von wenigstens 2 Sekunden, die Stillstandschaltung aktiviert wird, während bei einem Anfahrvorgang mit großem Fahrwiderstand, bei welchem z.B. die Fahrgeschwindigkeit während eines Schaltvorganges bis auf den Wert Null abnimmt, überwiegend nur sehr kurze Stillstandszeiten zu beobachten sind, bevor das Fahrzeug entweder erneut in die ursprüngliche Richtung beschleunigt oder aber zurückrollt. In diesem Fall wird die Stillstandschaltung abgeschaltet.

Besonders einfach und wirkungsvoll kann der Eingriff einer Stillstandschaltung in einen laufenden Schaltvorgang dann unterbunden werden, wenn die Anfahrüberwachungseinrichtung Daten über einen Schaltzustand des Getriebes einliest und die Stillstandschaltung dann unwirksam schaltet, wenn sie erkennt, dass eine Schaltung aktiv ist und insbesondere, wenn gerade ein Gangwechsel vollzogen wird. Diese Variante des erfindungsgemäßen Verfahrens erfordert nur einen minimalen Mehraufwand in einem konventionell bereits vorhandenen Getriebesteuerungsprogramm und verhindert das Abbrechen eines bereits begonnenen Gangwechselvorgangs zuverlässig.

Wenn die Anfahrüberwachungseinrichtung Daten über einen Schaltzustand des Getriebes einliest und die Stillstandschaltung dann unwirksam schaltet, wenn sie erkennt, dass eine Schaltung innerhalb eines definierten Zeitraumes aktiv war, wird die Stillstandschaltung auch für eine definierte Zeitspanne nach Abschluss einer Schaltung unwirksam geschaltet. Eine sofortige Rückschaltung nach einem erfolgreich durchgeführten Schaltvorgang kann so unterbunden werden. An Stelle eines zeitlichen Kriteriums oder zusätzlich dazu können hier auch z.B. die Fahrzeuggeschwindigkeit, die Getriebeeingangsdrehzahl oder andere Parameter Verwendung finden.

Eine besonders einfache Ausgestaltung der Erfindung liegt auch dann vor, wenn die Anfahrüberwachungseinrichtung Daten über einen Öffnungszustand der Kupplung einliest und die Stillstandschaltung dann unwirksam schaltet, wenn sie erkennt, dass die Kupplung offen ist. Eine offene Kupplung in der Drehmomentübertragungsstrecke zwischen dem Antriebsmotor und den Fahrzeugrädern kann einen zurzeit durchgeführten Gangwechsel signalisieren.

Da bei einer automatisch betätigten Kupplung immer ein Signal über den Zustand der Kupplung vorliegt, kann dieses Signal ebenfalls für eine besonders einfache Ausgestaltung des Verfahrens genutzt werden. Dabei ist es wie bei den in anderen Varianten eingelesenen Signalen zunächst unerheblich, ob das Signal einen Ist-Zustand beschreibt, oder im Rahmen einer Steuerung als Vorgabewert erzeugt wird. Im konkreten Fall kann - sofern dies vorliegt - das Signal eines Kupplungsstellungssensors verwendet werden. Sofern dieses Signal nicht zur Verfügung steht, kann jedoch ebenso ein Ansteuerungssignal an einen die Kupplung betätigenden Aktuator ausgewertet und verwendet werden.

Es sind daneben auch Fälle vorstellbar, in denen es sinnvoll ist, wenn die Anfahrüberwachungseinrichtung Daten über einen Öffnungszustand der Kupplung einliest und die Stillstandschaltung dann unwirksam schaltet, wenn sie erkennt, dass die Kupplung geschlossen ist. Auf diese Weise kann beispielsweise verhindert werden, dass nach einem erfolgreichen Schaltvorgang die Stillstandschaltung aktiv wird, sobald die Kupplung wieder geschlossen wird.

Abweichend von den vorstehend beschriebenen Ausprägungen des Verfahrens sollen im Folgenden andere Varianten des Verfahrens beschrieben werden, bei denen die Anfahrüberwachungseinrichtung Daten einliest, die direkt am Antriebsmotor bzw. Motorsteuergerät gewonnen werden können und die sich auf einen Zustand des Antriebsmotors beziehen, und auf deren Grundlage in Abhängigkeit von Entscheidungsregeln eine Unwirksamkeit der Stillstandschaltung bewirkt.

Dies bietet tendenziell im Verhältnis zu den bisher beschriebenen Varianten den Vorteil, die Leistungsfähigkeit des Motors bei der Entscheidung über eine Deaktivierung der Stillstandschaltung mit berücksichtigen zu können. So kann beispielsweise dann, wenn das Drehmoment des Antriebsmotors aufgrund einer zu großen Steigung nicht ausreicht, um das Fahrzeug entgegen der Steigung in Bewegung zu setzen, die Deaktivierung einer Stillstandschaltung durch die Anfahrüberwachungseinrichtung wieder aufgehoben werden. Dies bewirkt automatisch ein erneutes Anfahren im Anfahrgang. Die verwendeten Daten können dabei selbstverständlich auch aus anderen Steuergeräten bezogen werden oder aus Daten anderer Steuergeräte geschätzt oder berechnet werden. Entscheidend ist lediglich, dass es sich um Daten handelt, die sich auf einen Zustand des Antriebsmotors beziehen, und dass diese Daten oft in einem Motorsteuergerät ohnehin vorliegen oder aus den dort vorliegenden Daten mit geringem Aufwand generiert oder abgeschätzt werden können.

So sieht eine erste diesbezügliche Variante des Verfahrens vor, dass die Anfahrüberwachungseinrichtung Daten über eine Motordrehzahl einliest und die Stillstandschaltung dann unwirksam schaltet, wenn sie erkennt, dass die Motordrehzahl oberhalb eines dritten Grenzwertes liegt. Auf diese Weise kann bei Schaltvorgängen, bei welchen der Antriebsmotor im Zielgang bei der vorgegebenen niedrigen Anfangsgeschwindigkeit abgewürgt würde bzw. die Kupplung übermäßig beansprucht würde, die Stillstandschaltung aktiv sein, während sie in den übrigen Fällen deaktiviert werden kann.

Zudem ermöglicht die Motordrehzahl eine erste Abschätzung der abgebbaren Leistung. Wenn der Antriebsmotor aufgrund der geringen Drehzahl nur eine geringe Leistung abzugeben in der Lage ist, sollte die Stillstandschaltung aktiviert werden bzw. bleiben. Wenn die Leistung des Motors jedoch ausreichend hoch ist, um den gewünschten Schaltvorgang auszuführen ohne den Antriebsmotor abzuwürgen, kann die Stillstandschaltung deaktiviert werden. Es bietet sich an, für unterschiedliche Gangwechselfälle auch unterschiedliche Grenzwerte vorzusehen, die beispielsweise in einer Wertetabelle hinterlegt oder mit Hilfe von weiteren Einflussgrößen berechnet werden können.

Die Motordrehzahl stellt ein gutes Kriterium dafür dar, um die kurzfristig abrufbare Leistung des Antriebsmotors abzuschätzen. Die tatsächlich zurzeit abgegebene Leistung ist jedoch neben der Motordrehzahl auch von weiteren Parametern abhängig. Während die Beschleunigung der Motordrehzahl jedoch im Verhältnis zur für einen Schaltvorgang benötigten Zeit eine relevante Zeitspanne benötigt, kann der Grad der Motorfüllung bzw. das Luft-Kraftstoffgemisch innerhalb kürzester Zeit verändert werden. Die Motorfüllung ist daher ein wichtiger Indikator dafür, ob die Leistung des Antriebsmotors im Bedarfsfall schnell genug gesteigert werden kann, um den erhöhten Anforderungen nach einem Schaltvorgang zu genügen. Es ist daher in einer weiteren Ausprägung der Erfindung vorgesehen, dass die Anfahrüberwachungseinrichtung Daten über eine Motorfüllung einliest und die Stillstandschaltung dann unwirksam schaltet, wenn sie erkennt, dass ein diesbezüglich vierter Grenzwert überschritten wird.

Eine weitere Ausgestaltung des Verfahrens sieht vor, dass die Anfahrüberwachungseinrichtung Daten über ein Motormoment einliest und die Stillstandschaltung dann unwirksam schaltet, wenn sie erkennt, dass das Motormoment einen fünften Grenzwert überschreitet. Gerade weil die Drehzahl des Antriebsmotors für kurze Zeitspannen nur begrenzt veränderbar ist und bei eingelegtem Gang sowie geschlossener Kupplung eine von der Fahrzeuggeschwindigkeit abhängige Größe darstellt, kann mit Hilfe des Motordrehmomentes und der Motordrehzahl auf die abgebbare Leistung geschlossen werden. Schon das Motordrehmoment alleine erlaubt jedoch eine Abschätzung, die in vielen Fällen ausreichend sein kann.

Sofern mehrere der genannten unterschiedlichen Daten zur Verfügung stehen, können diese selbstverständlich sinnvoll kombiniert werden. So kann etwa aus der Drehzahl und dem Drehmoment des Antriebsmotors dessen Leistung ermittelt und als sinnvolles Kriterium von der Anfahrüberwachungseinrichtung eingelesen werden. An Stelle des Drehmomentes kann hier auch der Füllungsgrad für eine Abschätzung herangezogen werden. Die Einbeziehung weiterer Motordaten, wie etwa Zündzeitpunkte oder Antriebsmotortemperaturen, können ebenfalls genutzt werden.

Es ist dabei, wie bereits erwähnt, nicht entscheidend, ob die verwendeten Daten auf Sensorwerten oder auf Vorgabewerten beruhen, und ob diese von der Anfahrüberwachungseinrichtung direkt am Motorsteuergerät abgegriffen werden können, an anderen Steuergeräten vorliegen oder mit Hilfe anderer Daten berechnet oder abgeschätzt werden.

Falls das Fahrzeug beispielsweise über einen Sensor verfügt, welcher das Drehmoment im Antriebsstrang ermittelt, ist es sinnvoll, wenn die Anfahrüberwachungseinrichtung an Stelle entsprechender Motordaten Daten über ein Drehmoment im Antriebsstrang einliest und die Stillstandschaltung dann unwirksam schaltet, wenn sie erkennt, dass das Motordrehmoment einen sechsten Grenzwert überschreitet. Auf diese Weise werden externe Verluste, die beispielsweise durch das Zuschalten weiterer von dem Antriebsmotor antreibbarer Aggregate entstehen können, automatisch berücksichtigt, ohne dass dies weiterer Operationen bedarf.

Eine letzte Ausgestaltung des erfindungsgemäßen Verfahrens sieht vor, dass die Anfahrüberwachungseinrichtung Daten über eine Beschleunigung des Fahrzeugs einliest und die Stillstandschaltung dann unwirksam schaltet, wenn sie erkennt, dass die Beschleunigung einen siebten Grenzwert überschreitet. Bei relativ hohen Beschleunigungen kann davon ausgegangen werden, dass das Fahrzeug auch im Zielgang in der Lage sein wird, die Geschwindigkeit weiter zu erhöhen. Die Beschleunigung ist darüber hinaus ein besonders einfach zu erhebender Wert, der entweder bereits als solcher vorliegt, oder bei Bedarf aus der Änderung der Geschwindigkeit pro Zeiteinheit leicht berechnet werden kann.

Abschießend wird eine zur Durchführung des erfindungsgemäßen Verfahrens geeignete Vorrichtung vorgestellt, die zur Steuerung einer Stillstandschaltung eines Automatgetriebes eines Fahrzeuges geeignet ist, bei der eine Entscheidungsvorrichtung zur Auswahl des Zielganges und die bereits genannte Stillstandschaltung vorhanden sind. Sie ist **dadurch gekennzeichnet, dass** zusätzlich eine Anfahrüberwachungseinrichtung vorgesehen ist, die Daten über zumindest einen Fahrzeugzustand und gegebenenfalls weitere Daten als Eingangsgröße einlesen kann, und die so ausgestaltet ist, dass sie auf der Grundlage der Eingangsgrößen in Abhängigkeit von Entscheidungsregeln ein Ausgangssignal abzugeben in der Lage ist, welches eine Unwirksamkeit der Stillstandschaltung bewirken kann.

Die genauere Ausgestaltung und Anbindung ist im Einzelfall abhängig von den verwendeten Komponenten, der Datenstruktur, den räumlichen und sonstigen Einbauverhältnissen und weiteren Faktoren. Es ist jedoch oft sinnvoll, wenn die Anfahrüberwachungseinrichtung integraler Bestandteil einer Getriebesteuerungseinrichtung ist, da auf diese Weise der bauliche Aufwand besonders gering gehalten werden kann und der Zugriff auf benötigte Daten zumindest vom Automatgetriebe und der Kupplung besonders einfach zu realisieren ist.

Die Erfindung lässt sich anhand eines Ausführungsbeispiels weiter erläutern. Dabei ist es nicht möglich, sämtliche sinnvollen Kombinationen der verschiedenen Ausprägungen des erfindungsgemäßen Verfahrens bzw. der verschiedenen von der Anfahrüberwachungseinrichtung auswertbaren Daten vorzustellen. Es wird daher beispielhaft eine relativ einfache Variante eines erfindungsgemäßen Verfahrens beschrieben.

Ein mit einer Anfahrüberwachungseinrichtung ausgerüstetes Fahrzeug fährt voll beladen an einer Steigung von 15 Prozent an. Bei einer Geschwindigkeit von ca. 7 km/h wird von der Getriebesteuerung, genauer gesagt von der Entscheidungsvorrichtung der Befehl für einen Gangwechsel vom ersten in den zweiten Gang ausgegeben. Der Gangwechsel wird durch Öffnung der Kupplung eingeleitet, der zweite Gang eingelegt und die Kupplung wieder geschlossen. Zu diesem Zeitpunkt hat die Geschwindigkeit des Fahrzeugs jedoch nahezu auf den Wert Null abgenommen.

Bei einem herkömmlichen Fahrzeug würde nun die Stillstandschaltung einen Wechsel in den ersten Gang erzwingen, was aufgrund des abermaligen Schaltvorgangs zur Folge hätte, dass das Fahrzeug auf der Steigung zurückrollen würde und sich so eine potenziell gefährliche Situation ergibt.

Das erfindungsgemäß ausgerüstete Fahrzeug verfügt jedoch über ein Schaltelement am Armaturenbrett, mit welchem der Fahrer zwischen zwei stabilen Schaltstellungen wählen kann, ob die Anfahrüberwachungseinrichtung grundsätzlich aktiv sein soll. Zusätzlich dient das Schaltelement in der Aktiv-Stellung als Taster, mit dem ein Signal an die Anfahrüberwachungseinrichtung gegeben wird, welches eine zwangsweise Deaktivierung der Stillstandschaltung ohne Berücksichtigung weiterer Parameter bewirkt. Der Schalter befindet sich in diesem Beispiel in der Aktiv-Stellung.

Die Anfahrüberwachungseinrichtung ist an einen Fahrzeugbus, etwa an einen CAN-Bus angeschlossen und kann daher auf eine Vielzahl unterschiedlicher Daten zugreifen. Neben der aktuellen Fahrgeschwindigkeit, der aus dem zeitlichen Verlauf der Fahrgeschwindigkeit ermittelten Beschleunigung und deren Verlauf sowie dem beabsichtigten oder eingelegten Zielgang kann es auch bestimmte Motordaten einlesen, aus welchen sie berechnen kann, ob die kurzfristig abrufbare Leistung des Antriebsmotors bei der sich im Zielgang bei geschlossener Kupplung einstellenden Motordrehzahl ausreicht, um das Fahrzeug an der Steigung weiter zu beschleunigen. Hierfür wird zudem die Motortemperatur mit herangezogen, um den Antriebsmotor in nicht betriebswarmem Zustand nicht zu überlasten. Zusätzlich wird ermittelt, ob die Motordrehzahl bei eingekuppeltem Antriebsmotor noch ausreichend hoch für einen runden Motorenlauf ist bzw. wie lange die Kupplung im gleitenden Bereich arbeiten muss, um einen solchen Zustand zu erreichen.

Diese Verfahrensschritte werden jedoch bevorzugt nur dann abgearbeitet, wenn einige übergeordnete Kriterien erfüllt sind: Sofern die Anfahrüberwachungseinrichtung feststellt, dass der Fahrer die Bremse stärker als nur unerheblich betätigt, geht das System davon aus, dass eine weitere Beschleunigung nicht erwünscht ist und anschließend ein erneuter Anfahrvorgang stattfinden soll. Entsprechend wird die Stillstandschaltung nicht deaktiviert und der erste Gang eingelegt.

Wenn jedoch gleichzeitig eine Drehrichtungsumkehr erkannt wurde, das Fahrzeug also bereits die Fahrtrichtung gewechselt hat und die Steigung hinabrollt, kann die Anfahrüberwachungseinrichtung die Stillstandschaltung wirkungslos schalten, da dann davon ausgegangen werden kann, dass der Fahrer sich durch die Betätigung der Bremse bemüht, das Zurückrollen zu verhindern. In diesem Fall wäre es schädlich, wenn ein zeitraubender erneuter Gangwechsel in den ersten Gang durchgeführt würde. Stattdessen kann beispielsweise der Motorsteuerung und der Kupplung signalisiert werden, dass die Bremswirkung durch ein möglichst hohes Antriebsdrehmoment unterstützt werden soll.

Erkennt die Anfahrüberwachungseinrichtung andererseits, dass der Fahrer das Fahrpedal nur wenig auslenkt, so kann die Deaktivierung der Stillstandschaltung durch die Anfahrüberwachungseinrichtung wieder rückgängig gemacht werden, da der Fahrer in diesem Fall wahrscheinlich keine wesentliche Beschleunigung wünscht und daher die im Anfahrgang erreichbare Geschwindigkeit ausreichend ist.

Dieses Beispiel kann nur einige wenige mögliche aus der Menge der sinnvollen Verknüpfungen der im Einzelnen vorgestellten Verfahrensausprägungen vorstellen. Weitere sinnvolle Kombinationen ergeben sich für den Fachmann leicht auf Grundlage der vorgestellten einzelnen Verfahrensausprägungen bzw. bei Bedarf auch durch eine etwa automatisiert durchführbare Erzeugung unterschiedlichster Kombinationen und eine Auswahl einer jeweils geeigneten Kombination. Es bedarf hierzu keiner weiteren erfinderischen Tätigkeit, sondern in erster Linie einer Kenntnis der zur Verfügung stehenden Daten und einer Abschätzung des jeweiligen Aufwandes und Nutzens.

## Patentansprüche

1. Verfahren zur Steuerung einer Stillstandschaltung eines Automatgetriebes eines Fahrzeuges, mit einer Entscheidungsvorrichtung zur Auswahl des Zielganges, wobei mit einer Anfahrüberwachungseinrichtung und mit der Stillstandschaltung bei stehendem Fahrzeug oder bei Unterschreitung einer vorgegebenen Grenzgeschwindigkeit eine Aktivierung eines Anfahrganges bewirkt oder vorbereitet wird, **dadurch gekennzeichnet, dass** die Anfahrüberwachungseinrichtung Daten über zumindest einen Fahrzeugzustand sowie gegebenenfalls weitere Daten einliest, auf deren Grundlage in Abhängigkeit von Entscheidungsregeln eine Unwirksamkeit der Stillstandschaltung bewirkt wird.

2. Verfahren nach Anspruch 1, **dadurch gekennzeichnet, dass** die Anfahrüberwachungseinrichtung Daten einliest, die auf einem unmittelbaren Einwirken des Fahrers beruhen, und auf deren Grundlage in Abhängigkeit von Entscheidungsregeln eine Unwirksamkeit der Stillstandschaltung bewirkt wird.

3. Verfahren nach einem der Ansprüche 1 oder 2, **dadurch gekennzeichnet, dass** die Anfahrüberwachungseinrichtung Daten über eine Auslenkung eines Fahrpedals einliest und die Stillstandschaltung dann unwirksam schaltet, wenn der Fahrpedalwinkel einen ersten Grenzwert überschreitet.

4. Verfahren nach wenigstens einem der Ansprüche 1 bis 3, **dadurch gekennzeichnet, dass** die Anfahrüberwachungseinrichtung Daten über eine Aktivierung einer Fahrzeugbremse einliest und die Stillstandschaltung dann unwirksam schaltet, wenn keine Bremswirkung einer Fahrzeugbremse vorliegt oder die Bremswirkung unterhalb eines zweiten Grenzwertes liegt.

5. Verfahren nach wenigstens einem der Ansprüche 1 bis 4, **dadurch gekennzeichnet, dass** die Anfahrüberwachungseinrichtung Daten über eine Anforderung der Stillstandschaltung einliest und die Stillstandschaltung dann unwirksam schaltet, wenn keine Anforderung der Stillstandschaltung vorliegt.

6. Verfahren nach wenigstens einem der Ansprüche 1 bis 4, **dadurch gekennzeichnet, dass** die Anfahrüberwachungseinrichtung Daten über eine Deaktivierung der Stillstandschaltung einliest und die Stillstandschaltung dann unwirksam schaltet, wenn eine Deaktivierung der Stillstandschaltung vorliegt.

7. Verfahren nach wenigstens einem der vorherigen Ansprüche, **dadurch gekennzeichnet, dass** die Anfahrüberwachungseinrichtung Daten einliest, die am Getriebe und/oder einer Kupplung gewonnen werden und sich auf einen Zustand des Getriebes und/oder der Kupplung beziehen, und auf deren Grundlage in Abhängigkeit von Entscheidungsregeln eine Unwirksamkeit der Stillstandschaltung bewirkt wird.

8. Verfahren nach wenigstens einem der vorherigen Ansprüche, **dadurch gekennzeichnet, dass** die Anfahrüberwachungseinrichtung Daten über eine Drehrichtung von drehbaren Antriebsbestandteilen von einer Drehrichtungserkennung einliest und die Stillstandschaltung dann unwirksam schaltet, wenn sie eine Drehrichtung erkennt.

9. Verfahren nach wenigstens einem der vorherigen Ansprüche, **dadurch gekennzeichnet, dass** die Anfahrüberwachungseinrichtung Daten über eine Drehrichtung von einer Drehrichtungserkennung einliest und die Stillstandschaltung dann unwirksam schaltet, wenn sie eine Drehrichtungsumkehr erkennt.

10. Verfahren nach wenigstens einem der vorherigen Ansprüche, **dadurch gekennzeichnet, dass** die Anfahrüberwachungseinrichtung Daten über einen Stillstand des Fahrzeugs einliest und die Stillstandschaltung dann unwirksam schaltet, wenn sie keinen Fahrzeugstillstand über eine definierte Zeitspanne erkennt.

11. Verfahren nach wenigstens einem der vorherigen Ansprüche, **dadurch gekennzeichnet, dass** die Anfahrüberwachungseinrichtung Daten über einen Schaltzustand des Getriebes einliest und die Stillstandschaltung dann unwirksam schaltet, wenn sie erkennt, dass eine Getriebeschaltung aktiv ist.

12. Verfahren nach wenigstens einem der vorherigen Ansprüche, **dadurch gekennzeichnet, dass** die Anfahrüberwachungseinrichtung Daten über einen Schaltzustand des Getriebes einliest und die Stillstandschaltung dann unwirksam schaltet, wenn sie erkennt, dass eine Getriebeschaltung innerhalb eines definierten Zeitraumes aktiv war.

13. Verfahren nach wenigstens einem der vorherigen Ansprüche, **dadurch gekennzeichnet, dass** die Anfahrüberwachungseinrichtung Daten über einen Öffnungszustand der Kupplung einliest und die Stillstandschaltung dann unwirksam schaltet, wenn sie erkennt, dass die Kupplung offen ist.

14. Verfahren nach wenigstens einem der Ansprüche 1 bis 12, **dadurch gekennzeichnet, dass** die Anfahrüberwachungseinrichtung Daten über einen Öffnungszustand der Kupplung einliest und die Stillstandschaltung dann unwirksam schaltet, wenn sie erkennt, dass die Kupplung geschlossen ist.

15. Verfahren nach wenigstens einem der vorherigen Ansprüche, **dadurch gekennzeichnet, dass** die Anfahrüberwachungseinrichtung Daten einliest, die am Antriebsmotor bzw. im Motorsteuergerät gewonnen werden und die sich auf einen Zustand des Antriebsmotor beziehen, und auf deren Grundlage in Abhängigkeit von Entscheidungsregeln eine Unwirksamkeit der Stillstandschaltung bewirkt.

16. Verfahren nach Anspruch 15, **dadurch gekennzeichnet, dass** die Anfahrüberwachungseinrichtung Daten über eine Motordrehzahl einliest und die Stillstandschaltung dann unwirksam schaltet, wenn sie erkennt, dass die Motordrehzahl oberhalb eines dritten Grenzwertes liegt.

17. Verfahren nach wenigstens einem der Ansprüche 15 bis 16, **dadurch gekennzeichnet, dass** die Anfahrüberwachungseinrichtung Daten über eine Motorfüllung einliest und die Stillstandschaltung dann unwirksam schaltet, wenn sie erkennt, dass ein vierter Grenzwert (Motorfüllungsgrenzwert) überschritten wird.

18. Verfahren nach wenigstens einem der Ansprüche 15 bis 17, **dadurch gekennzeichnet, dass** die Anfahrüberwachungseinrichtung Daten über ein Motordrehmoment einliest und die Stillstandschaltung dann unwirksam schaltet, wenn sie erkennt, dass das Motordrehmoment einen fünften Grenzwert (Drehmomentgrenzwert) überschreitet.

19. Verfahren nach wenigstens einem der vorherigen Ansprüche, **dadurch gekennzeichnet, dass** die Anfahrüberwachungseinrichtung Daten über ein Drehmoment im Antriebsstrang einliest und die Stillstandschaltung dann unwirksam schaltet, wenn sie erkennt, dass dieses Drehmoment einen sechsten Grenzwert (Antriebsstrang-Drehmomentgrenzwert) überschreitet.

20. Verfahren nach wenigstens einem der vorherigen Ansprüche, **dadurch gekennzeichnet, dass** die Anfahrüberwachungseinrichtung Daten über eine Beschleunigung des Fahrzeugs einliest und die Stillstandschaltung dann unwirksam schaltet, wenn sie erkennt, dass die Beschleunigung einen siebten Grenzwert (Beschleunigungsgrenzwert) überschreitet.

21. Vorrichtung zur Steuerung einer Stillstandschaltung eines Automatgetriebes eines Fahrzeuges nach wenigstens einem der Verfahrensansprüche, wobei eine Entscheidungsvorrichtung zur Auswahl des Zielganges, eine Stillstandschaltung und eine Anfahrüberwachungseinrichtung vorgesehen sind, **dadurch gekennzeichnet, daß** die Anfahrüberwachungseinrichtung Daten über zumindest einen Fahrzeugzustand und gegebenenfalls weitere Daten als Eingangsgröße einlesen kann sowie derartig ausgestaltet ist, dass sie auf der Grundlage der Eingangsgrößen in Abhängigkeit von Entscheidungsregeln ein Ausgangssignal abzugeben in der Lage ist, mit welchem eine Unwirksamkeit der Stillstandschaltung bewirkbar ist.

22. Vorrichtung nach Anspruch 21, **dadurch gekennzeichnet, dass** die Anfahrüberwachungseinrichtung integraler Bestandteil einer Getriebesteuerung ist.

## Claims

1. Method for controlling a standstill circuit of an automatic transmission of a vehicle, having a decision device for selecting the target gearspeed, wherein a starting gearspeed is activated or prepared by means of a starting monitoring device and the standstill circuit when the vehicle is stationary or when a predefined limiting speed is undershot, **characterized in that** the starting monitoring device reads in data relating to at least one state of the vehicle and, if appropriate, reads in further data on the basis of which the standstill circuit is made inactive as a function of decision rules.

2. Method according to Claim 1, **characterized in that** the starting monitoring device reads in data which are based on direct action by the driver and on the basis of which the standstill circuit is made inactive as a function of decision rules.

3. Method according to one of Claims 1 or 2, **characterized in that** the starting monitoring device reads in data relating to deflection of an accelerator pedal, and it makes the standstill circuit inactive if the accelerator pedal angle exceeds a first limiting value.

4. Method according to one of Claims 1 to 3, **characterized in that** the starting monitoring device reads in data relating to activation of a vehicle brake, and it makes the standstill circuit inactive if no braking effect of a vehicle brake is occurring or the braking effect is below a second limiting value.

5. Method according to at least one of Claims 1 to 4, **characterized in that** the starting monitoring device reads in data relating to a request by the standstill circuit and it makes the standstill circuit inactive if no request by the standstill circuit is present.

6. Method according to at least one of Claims 1 to 4, **characterized in that** the starting monitoring device reads in data relating to deactivation of the standstill circuit and makes the standstill circuit inactive if the standstill circuit is deactivated.

7. Method according to at least one of the preceding claims, **characterized in that** the starting monitoring device reads in data which are obtained at the transmission and/or a clutch and relate to a state of the transmission and/or the clutch and on the basis of which the standstill circuit is made inactive as a function of decision rules.

8. Method according to at least one of the preceding claims, **characterized in that** the starting monitoring device reads in data relating to a direction of rotational of rotatable drive components from a direction of rotation detection means and it makes the standstill circuit inactive if it detects a direction of rotation.

9. Method according to at least one of the preceding claims, **characterized in that** the starting monitoring device reads in data relating to a direction of rotation from a direction of rotation detection means and it makes the standstill circuit inactive if it detects a reversal of the direction of rotation.

10. Method according to at least one of the preceding claims, **characterized in that** the starting monitoring device reads in data relating to a stationary state of the vehicle and it makes the standstill circuit inactive if it does not detect a stationary state of the vehicle over a defined time period.

11. Method according to at least one of the preceding claims, **characterized in that** the starting monitoring device reads in data relating to a shifted state of the transmission and it makes the standstill circuit inactive if it detects that a transmission shifting operation is active.

12. Method according to at least one of the preceding claims, **characterized in that** the starting monitoring device reads in data relating to a shifted state of the transmission and it makes the standstill circuit inactive if it detects that a transmission shifting operation was active within a defined time period.

13. Method according to at least one of the preceding claims, **characterized in that** the starting monitoring device reads in data relating to an open state of the clutch and it makes the standstill circuit inactive if it detects that the clutch is open.

14. Method according to at least one of Claims 1 to 12, **characterized in that** the starting monitoring device reads in data relating to an open state of the clutch and it makes the standstill circuit inactive if it detects that the clutch is closed.

15. Method according to at least one of the preceding claims, **characterized in that** the starting monitoring device reads in data which are acquired at the drive engine or in the engine control unit and which relate to a state of the drive engine and on the basis of which the standstill circuit is made inactive as a function of decision rules.

16. Method according to Claim 15, **characterized in that** the starting monitoring device reads in data relating to an engine speed and makes the standstill circuit inactive if it detects that the engine speed is above a third limiting value.

17. Method according to at least one of Claims 15 to 16, **characterized in that** the starting monitoring device reads in data about an engine charge and it makes the standstill circuit inactive if it detects that a fourth limiting value (engine charge limiting value) is exceeded.

18. Method according to at least one of Claims 15 to 17, **characterized in that** the starting monitoring device reads in data relating to an engine torque and it makes the standstill circuit inactive if it detects that the engine torque exceeds a fifth limiting value (torque limiting value).

19. Method according to at least one of the preceding claims, **characterized in that** the starting monitoring device reads in data relating to a torque in the drive train and it makes the standstill circuit inactive if it detects that this torque exceeds a sixth limiting value (drive train torque limiting value).

20. Method according to at least one of the preceding claims, **characterized in that** the starting monitoring device reads in data relating to acceleration of the vehicle and it makes the standstill circuit inactive if it detects that the acceleration exceeds a seventh limiting value (acceleration limiting value).

21. Device for controlling a standstill circuit of an automatic transmission of a vehicle according to at least one of the method claims, wherein a decision device for selecting the target gearspeed, a standstill circuit and a starting monitoring device are provided, **characterized in that** the starting monitoring device can read in data relating to at least one state of the vehicle and, if appropriate, further data as an input variable, and is configured in such a way that it is capable of outputting, on the basis of the input variables and as a function of decision rules, an output signal with which the standstill circuit can be made inactive.

22. Device according to Claim 21, **characterized in that** the starting monitoring device is an integral component of the transmission controller.

## Revendications

1. Procédé de commande d'un changement de vitesse à l'arrêt d'une boîte de vitesses automatique d'un véhicule, avec un dispositif de prise de décision pour sélectionner le rapport cible, une activation d'un rapport de démarrage étant opérée ou préparée avec un dispositif de surveillance de démarrage et le changement de vitesse à l'arrêt lorsque le véhicule est à l'arrêt ou en cas de passage en dessous d'une vitesse limite prédéfinie, **caractérisé en ce que** le dispositif de surveillance de démarrage lit des données correspondant au moins à un état du véhicule ainsi que le cas échéant d'autres données sur la base desquelles la caducité du changement de vitesse à l'arrêt est opérée en fonction de règles de prise de décision.

2. Procédé selon la revendication 1, **caractérisé en ce que** le dispositif de surveillance de démarrage lit des données basées sur une action directe du conducteur sur la base desquelles la caducité du changement de vitesse à l'arrêt est opérée en fonction de règles de prise de décision.

3. Procédé selon l'une quelconque des revendications 1 ou 2, **caractérisé en ce que** le dispositif de surveillance de démarrage lit des données correspond à une amplitude d'actionnement d'une pédale d'accélérateur puis commute de façon à rendre caduc le changement de vitesse à l'arrêt, lorsque l'angle de pédale d'accélérateur dépasse une première valeur limite.

4. Procédé selon au moins l'une quelconque des revendications 1 à 3, **caractérisé en ce que** le dispositif de surveillance de démarrage lit des données correspondant à l'activation d'un frein de véhicule puis commute de façon à rendre caduc le changement de vitesse à l'arrêt en l'absence d'effet de freinage du frein de véhicule ou si l'effet de freinage se situe en deçà d'une deuxième valeur limite.

5. Procédé selon au moins l'une quelconque des revendications 1 à 4, **caractérisé en ce que** le dispositif de surveillance de démarrage lit des données correspondant à une demande de changement de vitesse à l'arrêt puis commute de façon à rendre caduc le changement de vitesse à l'arrêt en l'absence de demande de changement de vitesse à l'arrêt.

6. Procédé selon au moins l'une quelconque des revendications 1 à 4, **caractérisé en ce que** le dispositif de surveillance de démarrage lit des données correspondant à une désactivation du changement de vitesse à l'arrêt puis commute de façon à rendre caduc le changement de vitesse à l'arrêt en l'absence de désactivation du changement de vitesse à l'arrêt.

7. Procédé selon au moins l'une quelconque des revendications précédentes, **caractérisé en ce que** le dispositif de surveillance de démarrage lit des données extraites au niveau de la boîte de vitesses et/ou d'un embrayage et faisant référence à un état de la boîte de vitesses et/ou de l'embrayage, une caducité du changement de vitesse à l'arrêt étant opérée sur la base de ces données en fonction de règles de prise de décision.

8. Procédé selon au moins l'une quelconque des revendications précédentes, **caractérisé en ce que** le dispositif de surveillance de démarrage lit des données correspondant à une direction de rotation de composantes d'entraînement pivotantes lors d'une détection de direction de rotation puis commute de façon à rendre caduc le changement de vitesse à l'arrêt lorsqu'il détecte une direction de rotation.

9. Procédé selon au moins l'une quelconque des revendications précédentes, **caractérisé en ce que** le dispositif de surveillance de démarrage lit des données correspondant à une direction de rotation lors d'une détection de direction de rotation puis commute de façon à rendre caduc le changement de vitesse à l'arrêt lorsqu'il détecte un changement de direction de rotation.

10. Procédé selon au moins l'une quelconque des revendications précédentes, **caractérisé en ce que** le dispositif de surveillance de démarrage lit des données correspondant à un arrêt du véhicule puis commute de façon à rendre caduc le changement de vitesse à l'arrêt s'il ne détecte pas d'arrêt du véhicule pendant une période de temps prédéfinie.

11. Procédé selon au moins l'une quelconque des revendications précédentes, **caractérisé en ce que** le dispositif de surveillance de démarrage lit des données sur un état de changement de vitesse de la boîte de vitesses puis commute de façon à rendre caduc le changement de vitesse à l'arrêt lorsqu'il détecte qu'un changement de vitesse de la boîte de vitesses est actif.

12. Procédé selon au moins l'une quelconque des revendications précédentes, **caractérisé en ce que** le dispositif de surveillance de démarrage lit des données correspondant à un état de changement de vitesse de la boîte de vitesses puis commute de façon à rendre caduc le changement de vitesse à l'arrêt lorsqu'il détecte qu'un changement de vitesse de la boîte de vitesses était actif pendant une plage de temps définie.

13. Procédé selon au moins l'une quelconque des revendications précédentes, **caractérisé en ce que** le dispositif de surveillance de démarrage lit des données correspondant à un état d'ouverture de l'embrayage puis commute de façon à rendre caduc le changement de vitesse à l'arrêt lorsqu'il détecte que l'embrayage est ouvert.

14. Procédé selon au moins l'une quelconque des revendications 1 à 12, **caractérisé en ce que** le dispositif de surveillance de démarrage lit des données sur un état d'ouverture de l'embrayage puis commute de façon à rendre caduc le changement de vitesse à l'arrêt lorsqu'il détecte que l'embrayage est fermé.

15. Procédé selon au moins l'une quelconque des revendications précédentes, **caractérisé en ce que** le dispositif de surveillance de démarrage lit des données extraites au niveau du moteur d'entraînement et/ou dans le module de commande du moteur et faisant référence à un état du moteur d'entraînement, une caducité du changement de vitesse à l'arrêt étant opérée sur la base de ces données en fonction de règles de prise de décision.

16. Procédé selon la revendication 15, **caractérisé en ce que** le dispositif de surveillance de démarrage lit des données correspondant à une vitesse de rotation du moteur puis commute de façon à rendre caduc le changement de vitesse à l'arrêt lorsqu'il détecte que la vitesse de rotation du moteur est au-dessus d'une troisième valeur limite.

17. Procédé selon au moins l'une quelconque des revendications 15 à 16, **caractérisé en ce que** le dispositif de surveillance de démarrage lit des données correspondant à une admission du moteur puis commute de façon à rendre caduc le changement de vitesse à l'arrêt lorsqu'il détecte qu'une quatrième valeur limite (valeur limite d'admission du moteur) est dépassée.

18. Procédé selon au moins l'une quelconque des revendications 15 à 17, **caractérisé en ce que** le dispositif de surveillance de démarrage lit des données correspondant à un couple moteur puis commute de façon à rendre caduc le changement de vitesse à l'arrêt lorsqu'il détecte que le couple moteur dépasse une cinquième valeur limite (valeur limite de couple).

19. Procédé selon au moins l'une quelconque des revendications précédentes, **caractérisé en ce que** le dispositif de surveillance de démarrage lit des données correspondant à un couple dans la chaîne de transmission puis commute de façon à rendre caduc le changement de vitesse à l'arrêt lorsqu'il détecte que ce couple dépasse une sixième valeur limite (valeur limite de couple de la chaîne de transmission).

20. Procédé selon au moins l'une quelconque des revendications précédentes, **caractérisé en ce que** le dispositif de surveillance de démarrage lit des données correspondant à une accélération du véhicule puis commute de façon à rendre caduc le changement de vitesse à l'arrêt lorsqu'il détecte que l'accélération dépasse une septième valeur limite (valeur limite d'accélération).

21. Dispositif de commande d'un changement de vitesse à l'arrêt d'une boîte de vitesses automatique d'un véhicule selon au moins l'une quelconque des revendications de procédé précédentes, un dispositif de prise de décision, un changement de vitesse à l'arrêt et un dispositif de surveillance de démarrage étant prévus pour choisir le rapport cible, **caractérisé en ce que** le dispositif de surveillance de démarrage peut lire des données correspondant à au moins un état du véhicule et le cas échéant d'autres données sous la forme d'une grandeur d'entrée et est réalisé de telle sorte qu'il est en mesure d'émettre, sur la base des grandeurs d'entrée, un signal de sortie en fonction des règles de prise de décision, ledit signal permettant d'opérer une caducité du changement de vitesse à l'arrêt.

22. Dispositif selon la revendication 21, **caractérisé en ce que** le dispositif de surveillance de démarrage fait partie intégrante d'une commande de boîte de vitesses.
